Europäisches Patentamt

European Patent Office

Office européen des brevets

(11) Publication number: **0 459 049 A1**

# EUROPEAN PATENT APPLICATION

(21) Application number: 90305996.2

(22) Date of filing: 01.06.90

(51) Int. Cl.⁵: **G01B 7/06, G01F 23/24**

(43) Date of publication of application:
**04.12.91 Bulletin 91/49**

(84) Designated Contracting States:
**AT BE CH DE DK ES FR GB GR IT LI LU NL SE**

(71) Applicant: **CHINA STEEL CORPORATION**
**No. 1 Chung-Kang Road**
**Hsiao-Kang District, Kaohsiung(TW)**

(72) Inventor: **Chen, Hong Bin**
**No. 1 Chung-Kang Road, Hsiao-Kang District**
**Kaohsiung City, Taiwan(CH)**

(74) Representative: **Crampton, Keith John Allen et al**
**D. YOUNG & CO. 10 Staple Inn**
**London WC1V 7RD(GB)**

(54) Apparatus and process for determining thickness of the slag formed on molten steel.

(57) The thickness of the layer of slag formed on molten steel can be determined by lowering, at a uniform speed, a dielectric measuring electrode unit 2 with a lifting and lowering device 1. An ammeter or a voltmeter 3 is connected to the dielectric measuring electrode unit to measure the varying values of the current or voltage while the electrode unit is lowered to the molten steel passing through air and the slag. A speedometer 5 measures the speed of the electrode unit, and a recording and displaying unit 4 shows two sharp changes occurring in the values of the current and the time period between two time values at which the sharp changes occur. The thickness of the slag can be calculated by using the value of the time period and the speed measured by the speedometer.

This invention relates to a process and an apparatus for determining the thickness of the slag formed on a molten steel during steelmaking.

It is known that slag is produced in large quantities when a molten steel is transferred from a steel-making kiln or a rotary kiln to a ladle, or from a steel tank to a tundish. Even during the running process of the steel, a small amount of slag may be taken into the steel mold employed. The main problem is that the slag may become an undesirable matter in the processing of steel. The common solution to the above problem is to remove the slag from the molten steel, or to add other suitable substances to react with the slag to form compounds which do not have adverse effects to the steel. Therefore, it is necessary to know the amount of the slag formed on the molten steel during the steelmaking or steel-refining process.

According to the present invention, a process for measuring the thickness of a layer of slag present on molten steel comprises: lowering, at a uniform speed, a dielectric measuring electrode means into the molten steel by passing through the layer of the slag and a gas medium above the slag; determining the speed of the movement of said dielectric measuring electrode means; applying a voltage to the dielectric measuring electrode means ; determining the varying values of the current flowing through the dielectric measuring electrode means resulting from different dielectric properties of the molten steel, the slag and the gas medium; and obtaining two values of the current which change sharply and the times at which the sharp changes occur. The process may further include the step of determining the distance that the dielectric measuring electrode means travels within the period between said two times of sharp change in current based on the measured speed of the dielectric measuring electrode means.

The apparatus for determining the thickness of the slag includes a lifting and lowering device, a dielectric measuring electrode unit held by the lifting and lowering device, an ammeter or voltmeter connected to the dielectric measuring electrode unit to measure the varying values of the current or the voltage while the electrode unit is lowered to the molten steel passing through air and the slag, a speedometer to measure the speed of the electrode unit, and a recording and displaying unit to show two sharp changes occurring in the current and the time period between the sharp changes. The thickness of the slag can be calculated from the time interval and the speed measured by the speedometer.

The exemplary preferred embodiment will be described in detail with reference to the accompanying drawings, in which:

Figure 1 is a schematic view showing an apparatus embodying the present invention;

Figures 2 and 3 are diagrams which show the plots of the current flowing through the electrode unit of the apparatus against time; and

Figure 4 an closed type electrode unit used in the apparatus of Figure 1.

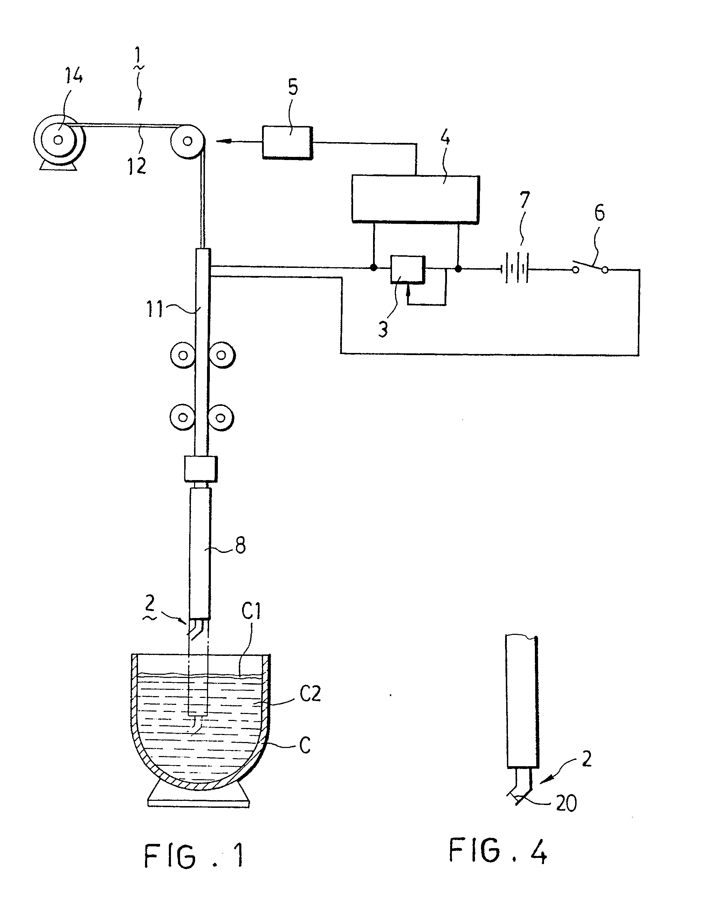

Referring to Figure 1, a preferred embodiment of the present invention includes a dielectric measuring electrode unit 2 mounted on an insulated support 8 which in turn is carried by a lifting unit 1. The lifting unit 1 includes a holder 11, a cord connected to the holder 11, and a reeling unit 14 connected to the cord. The dielectric measuring electrode unit 2 is connected electrically to an ammeter 3, an electric source 7 and a switch 6. Alternatively, the ammeter 3 can be replaced by a voltmeter. A recording and displaying unit 4 is electrically connected to the circuit of the dielectric measuring electrode unit 2. A speedometer 5 which measures the speed of the lifting unit 1 is also connected to the recording and displaying unit 4.

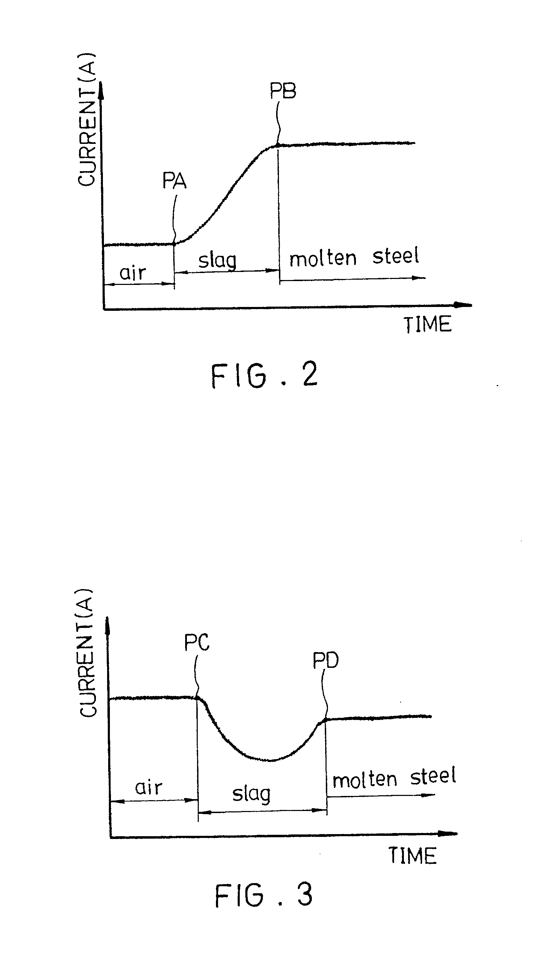

In the operation to determine the thickness of a layer of slag C1 formed on a molten steel C2 which is in a container C, a voltage is applied to the electrode unit, and the electrode unit 2 is lowered into the molten steel passing through the air and the slag C1 which have different dielectric properties. The ammeter 3 determines the current flowing through the electrode unit 2 which varies as the electrode unit 2 passes through substances of different dielectric properties, i.e. air, slag and molten steel. The speedometer 5 determines the speed of the movement of the electrode unit 2. The recording and displaying units 4 records the speed measured by the speedometer and the varying value of the current measured by the ammeter 3, and measures the time for the measuring operation of the ammeter. The unit 4 also presents the plots of the current against time as shown in Figures 2 and 3.

The electrode unit 2 may be arranged such that it has two spaced electrodes. In this case, the diagram displayed is one which is shown in Figure 2. From the diagram, it can be inferred that: the initial current which is substantially constant occurs when the electrode unit 2 is in the air; the current starts to change or increase as soon as the electrode unit 2 enters the layer of slag; the current stops changing and becomes constant when the electrode unit 2 leaves the slag layer and enters the bulk of the molten steel. The diagram shows two sharp changes PA and PB in the plot of current v/s time. The time value at which the sharp change PA occurs is interpreted as the instant at which the electrode unit 2 starts to enter the slag. The other time value at which the sharp change PB occurs is interpreted as the instant at which the electrode unit 2 leaves the slag. The current value between the points PA and PB is varying because of the varying composition of the slag. By using the time interval between the above two time values and the speed measured by the speedometer, the distance traveled by the electrode unit 2 during that interval, or the thickness of the slag can be determined. The means for determining the distance or the thickness of the slag can be computerized and incorporated in the unit 4 so that the unit 4 shows the final result or the thickness of the slag.

The electrode unit 2 may also be arranged as a closed type electrode unit shown in Figure 4, wherein a conductive wire 20 made of a material of low melting point is connected to two spaced electrodes of the electrode unit 2. When using this electrode unit, the diagram displayed is one shown in Figure 3. The diagram shows that: although the electrodes are in the air, the initial current is high because of the presence of the wire 20; the current which is initially constant decreases as the electrode unit 2 is moved from air to the layer of the slag because the wire 20 melts; as the electrode unit 2 are moved from the slag to the molten steel, the current increases until it reaches a second constant value; and the second constant value is smaller than the initial constant value. Two sharp changes occur at PC and PD. The time interval between the sharp changes PC and PD occur can be used to determine the thickness of the slag C1.

## Claims

1. A process for measuring the thickness of a layer of slag formed on molten steel placed in a container, said process comprising:

   lowering, at a uniform speed, a dielectric measuring electrode means 2 into the molten steel C2 by passing through the layer of slag C1 and a gas medium above the slag;

   determining the speed of the movement of said dielectric measuring electrode means 2;

   applying a voltage to said dielectric measuring electrode means 2;

   determining the varying values of the current flowing through said dielectric measuring electrode means resulting from different dielectric properties of the molten steel, the slag and the gas medium; and

   obtaining the values of two sharp changes in the current and the time values at which said sharp changes occur.

2. A process as claimed in Claim 1, further comprising, determining the distance that said dielectric measuring electrode means travels within the period between said two time values based on the measured speed of the dielectric measuring electrode means.

3. An apparatus for measuring the thickness of a layer of slag formed on molten steel placed in a container, said apparatus comprising:

   a dielectric measuring circuit means having a dielectric measuring electrode unit 2 to be lowered into molten steel C2 by passing through the layer of slag C1 and a gas medium above the slag;

   means 1 for lowering and lifting said dielectric measuring electrode unit 2 at a uniform speed;

   means 5 for determining the speed of the movement of said dielectric measuring electrode means;

   means 3 for determining the varying values of the current flowing through said dielectric measuring electrode means resulting from the different dielectric properties of molten steel, slag and the gas medium; and

   means 4 for showing the values of two sharp changes in the current and the time values at which the sharp changes occur.

4. An apparatus as claimed in Claim 3 , further comprising means for determining the distance that said dielectric measuring electrode means travels within the period between said two time values by using the measured speed of the dielectric measuring electrode means.

FIG . 1

FIG . 4

FIG . 2

FIG . 3

European
Patent Office

**EUROPEAN SEARCH
REPORT**

Application Number

**EP 90 30 5996**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 064 499 (BRITISH IRON & STEEL RESEARCH ASSOCIATION) <br> * Entire document * | 1,2,3,4 | G 01 B 7/06 <br> G 01 F 23/24 |
| | — — — | | |
| X | PATENT ABSTRACTS OF JAPAN, vol. 11, no. 42 (P-545)[2489], 6th February 1987; <br> & JP-A-61 212 702 (NIPPON KOKAN K.K.) 20-09-1986 <br> * Abstract figure * | 1,2,3,4 | |
| | — — — | | |
| A | PATENT ABSTRACTS OF JAPAN, vol. 10, no. 322 (P-511)[2378], 31st October 1986; <br> & JP-A-61 128 103 (NIPPON ASAHI GLASS CO., LTD) 16-06-1986 <br> * Abstract; figure * | 1-4 | |
| | — — — | | |
| A | EP-A-0 131 979 (NORDDEUTSCHE AFFINERIE AG) <br> * Page 3, line 14 - page 7, figures * | 1-4 | |
| | — — — — — | | |
| | | | **TECHNICAL FIELDS SEARCHED (Int. Cl.5)** |
| | | | G 01 B <br> G 01 F |

The present search report has been drawn up for all claims

| Place of search | Date of completion of search | Examiner |
|---|---|---|
| The Hague | 05 February 91 | BROCK T.J. |